Europäisches Patentamt

European Patent Office

Office européen des brevets

(19)

(11) EP 1 489 321 A1

(12) EUROPEAN PATENT APPLICATION

(43) Date of publication:
22.12.2004 Bulletin 2004/52

(51) Int Cl.7: F16C 39/06, H02K 7/09, H02P 6/10

(21) Application number: 04251754.0

(22) Date of filing: 25.03.2004

(84) Designated Contracting States:
AT BE BG CH CY CZ DE DK EE ES FI FR GB GR HU IE IT LI LU MC NL PL PT RO SE SI SK TR
Designated Extension States:
AL LT LV MK

(30) Priority: 22.04.2003 JP 2003116437

(71) Applicant: BOC Edwards Japan Limited
Tokyo (JP)

(72) Inventors:
• Ohtachi, Yoshinobu,
c/o BOC Edwards Japan Ltd.
Narashino-shi, Chiba (JP)

• Namiki, Hitotaka, c/o BOC Edwards Japan Ltd.
Narashino-shi, Chiba (JP)
• Maejima, Yasushi, c/o BOC Edwards Japan Ltd.
Narashino-shi, Chiba (JP)
• Fukami, Hideo, c/o BOC Edwards Japan Ltd.
Narashino-shi, Chiba (JP)
• Kawashima, Toshiaki,
c/o BOC Edwards Japan Ltd.
Narashino-shi, Chiba (JP)

(74) Representative: Sturt, Clifford Mark et al
Miller Sturt Kenyon
9 John Street
London WC1N 2ES (GB)

(54) **Motor control system, motor apparatus, vacuum pump, correction current value measuring apparatus, and motor control method**

(57) A correction value of electromagnetic current supplied to each electromagnet, such that torque generated by a motor is constant, is determined for each predetermined angle while a rotor is rotated, by which an electromagnetic current of each phase is corrected. The correction value can be calculated by a predetermined formula using an induced voltage etc. of motor. Also, the configuration may be such that at the time when the motor is driven, the correction value is calculated for each predetermined angle and is stored in a RAM, and during the operation of the motor, the correction value is read from the RAM to correct the electromagnet current.

Fig. 1

EP 1 489 321 A1

**Description**

BACKGROUND OF THE INVENTION

1. Field of the Invention

The present invention relates to a motor control system which is used, for example, for a motor which rotates a rotor of a vacuum pump, a motor apparatus, a vacuum pump, a correction current value measuring apparatus, and a motor control method.

2. Description of the Related Art

A vacuum pump of a type such that pumping action is produced by rotationally driving a rotor by a motor, such as a molecular pump and an oil-less pump, has been widely used, for example, for pumping reactive gas out of semiconductor manufacturing equipment or pumping out from a body tube of an electron microscope in the industrial and research fields because it has high pumping capability and can easily achieve high vacuum.

Among the vacuum pumps, a turbo-molecular pump is configured so that a rotor formed with moving vanes is rotated at a high speed by a motor, and pumping action is produced by the action of the moving vanes rotating at a high speed and fixed vanes fixed to a housing.

As this motor, a DC brushless motor is generally used. The DC brushless motor is configured so that a rotating magnetic field is produced by controlling an electromagnet current supplied to an electromagnet provided on the stator side, and this rotating magnetic field is applied to a permanent magnet provided on the rotor side.

For example, in the case of a three-phase motor, the torque generated by the DC brushless motor is expressed by Formula (1).

$$T = \sum_{n=0}^{2} T_n = \sum_{n=0}^{2} \{K \cdot \sin(\theta - 2n\,\pi/3)\}\{I \cdot \sin(\theta - 2n\,\pi/3)\} = (3/2)K \cdot I \quad \cdots \quad (1)$$

where, n = 0, 1 and 2, and K is a torque constant (induced voltage constant). I is a current amplitude of each phase (U phase, V phase, W phase), and $\theta$ is the rotation angle of rotor. This formula indicates the case of a sinusoidal drive system.

K and I are constants determined by the mechanism design of field and the design of circuit. From Formula (1), the torque generated by the DC brushless motor is a constant, so that, in theory, torque pulsation and vibrations caused by torque pulsation do not occur.

The prior art for reducing vibrations of the DC brushless motor has been disclosed, for example, in Unexamined Japanese Patent Publication No. H11(1999)-356084.

The preparing method for pseudo sinusoidal wave described in this Publication is to prepare a pseudo sinusoidal wave by a simple method to reduce the torque ripple of DC brushless motor.

SUMMARY OF THE INVENTION

However, in the conventional DC brushless motor, the magnetic flux density of permanent magnet, which is means for generating a field, varies due to the composition and magnetization of material at the early stage (at the manufacturing time), and further during the operation of motor, the amount of variations is increased by demagnetization due to the field generated by the electromagnet formed by a motor winding.

Also, the coaxiality error of motor rotor and motor stator is small, and in the case where a magnetic bearing is used as a bearing, the rotor support rigidity of bearing is lower than that of a ball bearing, so that the rotor rotates around its center of gravity. Therefore, if the center of gravity of rotor shifts from the shape center, the amount of gap between the rotor and stator varies during the rotation.

For these reasons, the actual DC brushless motor is difficult to control with high accuracy so that the value of K·sin(θ-2nπ/3) in Formula (1) is the design value, and thus an error En is provided. Considering this error En, the aforementioned Formula (1) is reduced to Formula (2).

$$T = \sum_{n=0}^{2} T_n = \sum_{n=0}^{2} \{K \cdot \sin(\theta - 2n\,\pi/3) + E_n\}\{I \cdot \sin(\theta - 2n\,\pi/3)\}$$

$$= (3/2)K \cdot I + \sum_{n=0}^{2} \{E_n \cdot I \cdot \sin(\theta - 2n\,\pi/3)\} \quad \cdots \quad (2)$$

According to Formula (2), the torque generated by the motor is not a constant. Torque pulsation occurs, and the stator is vibrated by the reaction of this torque pulsation.

The vibrations sometimes exert adverse influence on equipment to which the molecular pump is connected. For example, when the vibrations propagate to an electron microscope, the image of electron microscope may be disturbed, and the resolution thereof may be decreased.

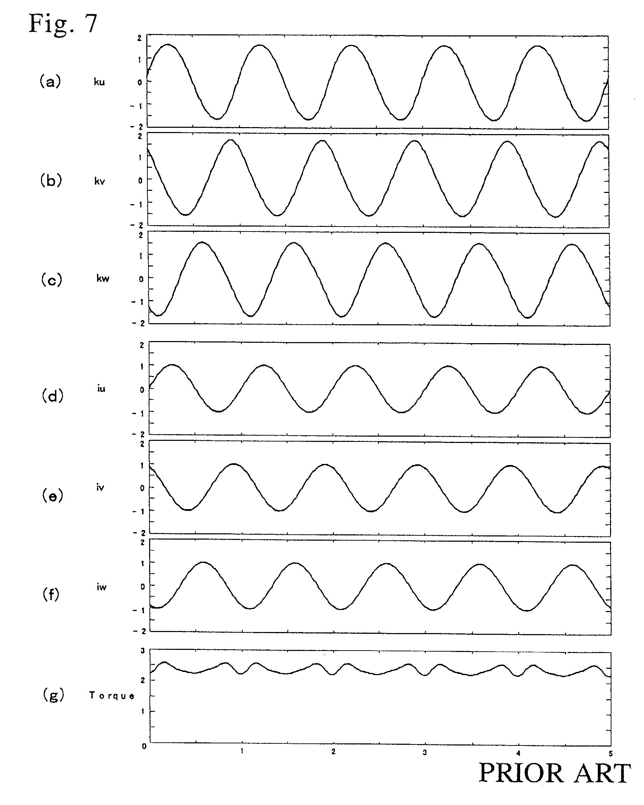

FIG. 7 is a waveform diagram in the case where a three-phase DC brushless motor is operated by the conventional motor control system. FIGS. 7(a) to 7(c) are waveform diagrams showing induced voltages generated in motor windings of U phase, V phase, and W phase, respectively. Inherently, these waves should be sinusoidal waves in which the amplitude is equal and the phase shifts by $2\pi/3$, but these waves are sinusoidal waves having an error as shown in the figures.

FIGS. 7(d) to 7(f) are waveform diagrams showing electromagnet currents supplied to motor windings of U phase, V phase, and W phase, respectively. These waves are sinusoidal waves in which the phase shifts by $2\pi/3$ as shown in the figure.

FIG. 7(g) is a waveform diagram showing torque generated by the motor. In theory, the torque should be constant, but actually it pulsates as shown in the figure, and the stator is vibrated by the reaction of this torque pulsation.

Accordingly, an object of the present invention is to reduce vibrations generated by a motor apparatus in a vacuum pump etc.

To achieve the above object, the invention of a first aspect provides a motor control system which controls a motor having a motor rotor formed with magnetic poles of a predetermined number of poles, and an electromagnet which is disposed around the motor rotor and on which a motor winding is wound, including rotation angle detecting means for detecting the rotation angle of the motor rotor; current supplying means for supplying an electric current of predetermined phase number according to the detected rotation angle to the motor winding; and correcting means for correcting the electric current supplied to the motor winding by the current supplying means using a correction current value corresponding to the rotation angle of the motor rotor, which compensates a difference between torque generated by the motor rotor and the theoretical value of the torque.

The correction current value is provided for each phase, and the correcting means corrects the electric current of each phase using the corresponding correction current value of each phase.

As a method for detecting the rotation angle of the motor rotor of the rotation angle detecting means, for example, a method in which a signal generator for generating an electric signal each time the motor rotor rotates through a predetermined angle is provided, and the number of the electric signals is directly measured, and a method in which the number of signals obtained by successively doubling the electric signal is measured can be cited.

The invention of a second aspect provides the motor control system according to the invention of the first aspect, characterized in that a plurality of the electromagnets are present for each phase; the electromagnets are supplied with an electric current independently from the current supplying means; and the correcting means corrects the electric current for each of the electromagnets.

The invention of a third aspect provides the motor control system according to the invention of the first or second aspect, characterized in that the correcting means adds a correction current value corresponding to the detected rotation angle to the electric current.

The invention of a fourth aspect provides the motor control system according to the invention any one of the first to third aspects, characterized in that the motor control system includes storage means for storing a correction current value corresponding to the rotation angle of the motor rotor; and the correcting means acquires a correction current value corresponding to the detected rotation angle from the storage means and adds the acquired correction current value to the electric current.

The invention of a fifth aspect provides the motor control system according to the invention any one of the first to fourth aspects, characterized in that the motor control system includes induced voltage acquiring means for acquiring an induced voltage of the motor winding of each phase; and correction current value calculating means for calculating the correction current value corresponding to the rotation angle of the motor rotor of each phase, and the correction current value calculating means calculates the correction current value using the acquired induced voltage.

The invention of a sixth aspect provides the motor control system according to the invention of the fifth aspect, characterized in that the motor control system includes angular velocity acquiring means for acquiring the angular velocity of the motor rotor; and the correction current value calculating means calculates the correction current value Cn of the n-th phase by a formula of $Cn = -En \cdot In/(Fn+En)$, where n is an integer value from 0 to N-1 for an electric current of N phase, where N is an integer of 2 or more; En is a value calculated by a formula of $En = Vn/\omega - Fn$, where $\omega$ is an angular velocity acquired by the angular velocity acquiring means, Vn is the induced voltage of each phase n acquired by the induced voltage acquiring means, and Fn is a theoretical value of an induced voltage constant of each phase n corresponding to the rotation angle of the motor rotor; and In is the current value of each phase n corresponding to the rotation angle of the motor rotor.

As a method for acquiring the angular velocity of the angular velocity acquiring means, for example, a method in which $\omega$ is directly measured by using a sensor for detecting $\omega$, and a method in which $\omega$ is calculated from the time change of $\theta$ can be cited.

The invention of a seventh aspect provides a motor apparatus including a motor rotor formed with magnetic poles of a predetermined number of poles; an electromagnet which is disposed around the motor rotor and on which a motor winding is wound; and the motor control system according to the invention any one of the first to sixth aspects for supplying an electric current of predetermined phase number to the motor winding.

The invention of a eighth aspect provides a vacuum pump including a housing having a cylindrical shape; a pump stator provided at the inner periphery of the housing; a rotating shaft pivotally supported so as to be rotatable relatively to the housing and the pump stator; a pump rotor to which the rotating shaft is fixedly provided and which is provided on the inner periphery side of the pump stator; and the motor apparatus according to the invention of the seventh aspect for rotating the pump rotor.

The invention of an ninth aspect provides a correction current value measuring apparatus for acquiring a correction current value for correcting an electric current of predetermined phase number supplied to a motor, which has a motor rotor formed with magnetic poles of a predetermined number of poles; and an electromagnet which is disposed around the motor rotor and on which a motor winding is wound, including rotation angle detecting means for detecting the rotation angle of the motor rotor; induced voltage acquiring means for acquiring an induced voltage of the motor winding of each phase so as to correspond to the detected rotation angle; correction current value calculating means for calculating a correction current value corresponding to the rotation angle of the motor rotor, which compensates a difference between torque generated by the motor rotor and the theoretical value of the torque, using the acquired induced voltage; and output means for outputting the calculated correction current value.

The invention of a tenth aspect provides the correction current value measuring apparatus according to the invention of the ninth aspect, characterized in that the correction current value measuring apparatus includes angular velocity acquiring means for acquiring the angular velocity of the motor rotor; and the correction current value calculating means calculates the correction current value Cn of the n-th phase by a formula of $Cn = -En \cdot In/(Fn+En)$, where n is an integer value from 0 to N-1 for an electric current of N phase, where N is an integer of 2 or more; En is a value calculated by a formula of $En = Vn/\omega - Fn$, where $\omega$ is an angular velocity acquired by the angular velocity acquiring means, Vn is the induced voltage of each phase n acquired by the induced voltage acquiring means, and Fn is a theoretical value of an induced voltage constant of each phase n corresponding to the rotation angle of the motor rotor; and In is the current value of each phase n corresponding to the rotation angle of the motor rotor.

As a method for acquiring the angular velocity of the angular velocity acquiring means, for example, a method in which $\omega$ is measured directly by using a sensor for detecting $\omega$, and a method in which $\omega$ is calculated from the time change of $\theta$ can be cited.

The invention of a eleventh aspect provides a motor control method for controlling a motor which has a motor rotor formed with magnetic poles of a predetermined number of poles, and an electromagnet which is disposed around the motor rotor and on which a motor winding is wound, including, in a motor control system having rotation angle detecting means, current supplying means, and correcting means, a rotation angle detecting step of detecting the rotation angle of the motor rotor by using the rotation angle detecting means; a current supplying step of supplying an electric current of predetermined phase number according to the detected rotation angle to the motor winding by using the current supplying means; and a correcting step of correcting the electric current supplied to the motor winding by the current supplying means using a correction current value corresponding to the rotation angle of the motor rotor, which compensates a difference between torque generated by the motor rotor and the theoretical value of the torque, by using the correcting means.

According to the present invention, vibrations generated by the motor in a vacuum pump etc. can be reduced.

BRIEF DESCRIPTION OF THE DRAWINGS

FIG. 1 is a schematic view showing a functional configuration of a motor control system in accordance with an embodiment;

FIG. 2 is a flowchart for illustrating a procedure for an operation part to output a current command value;

FIG. 3 is a sectional view showing a construction of a molecular pump in accordance with an embodiment;

FIG. 4 is a waveform diagram for a motor control system in accordance with an embodiment;

FIG. 5 is a flowchart for illustrating a procedure for an operation part to calculate a corrected current command value in a modified example;

FIG. 6 is a flowchart for illustrating a procedure for an operation part to calculate a correction value Cn in a modified example; and

FIG. 7 is a waveform diagram for a conventional motor control system.

DESCRIPTION OF THE PREFERRED EMBODIMENTS

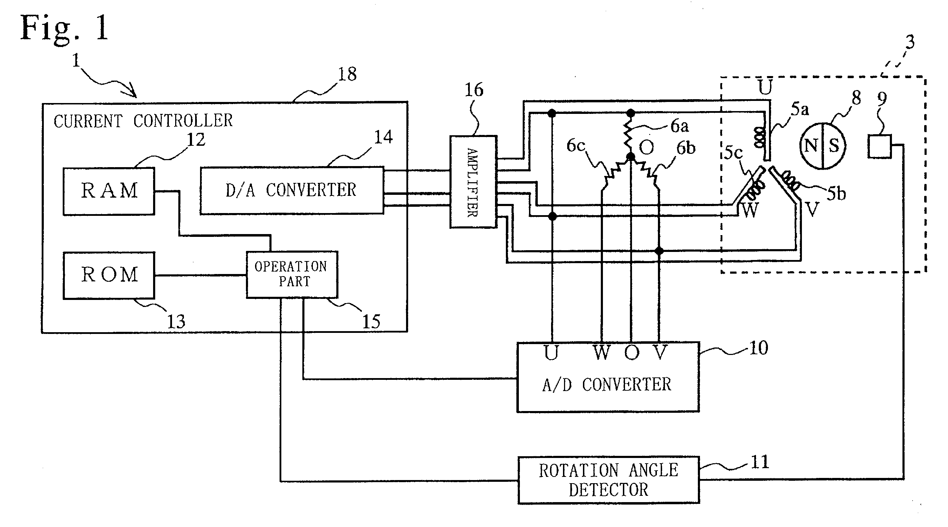

A preferred embodiment of the present invention will now be described in detail with reference to FIGS. 1 to 6.

(1) Outline of embodiment

A motor control system of this embodiment is configured so that a correction current value (hereinafter referred to as a correction value) of electromagnet current supplied to each electromagnet, such that torque generated by a motor is a fixed value determined from the theoretical value, is determined at predetermined time intervals while a rotor is rotated, and this correction value is added to the electromagnet current, by which the corrected electromagnet current is supplied to a motor winding.

This correction value can be calculated by the formula described later using induced voltage of motor and the like.

Thus, in this embodiment, the correction value is calculated while the motor is driven, and the electromagnet current can be corrected in real time.

(2) Details of embodiment

First, the theoretical background of a motor control method carried out in this embodiment is explained.

As a molecular pump of this embodiment, a DC brushless motor driven in a three-phase sinusoidal drive system is used.

The motor control system of this embodiment adds a correction component Cn to an electromagnet current of $I \cdot \sin(\theta - 2n\pi/3)$, which is a sine-wave current supplied to electromagnet of each phase, so that the torque generated by the motor is constant. First, Cn that meets this condition is determined, where n = 0 (U phase), 1 (V phase), and 2 (W phase).

By considering the added correction component Cn in Formula (2), Formula (3) is obtained.

$$T = \sum_{n=0}^{2} T_n = \sum_{n=0}^{2} \{K \cdot \sin(\theta - 2n\pi/3) + E_n\}\{I \cdot \sin(\theta - 2n\pi/3) + C_n\}$$

$$= (3/2)K \cdot I + \sum_{n=0}^{2} \{C_n \cdot K \cdot \sin(\theta - 2n\pi/3) + E_n \cdot I \cdot \sin(\theta - 2n\pi/3) + E_n \cdot C_n\} \quad \cdots \quad (3)$$

If, in Formula (3), the term causing torque pulsation and vibrations, that is, the term added by $\sum$ on the rightmost side of Formula (3) is taken as 0 for each phase, Formula (4) is obtained.

$$C_n \cdot K \cdot \sin(\theta - 2n\pi/3) + E_n \cdot I \cdot \sin(\theta - 2n\pi/3) + E_n \cdot C_n = 0 \qquad (4)$$

By solving Formula (4) for Cn, Formula (5) is obtained.

$$C_n = -E_n \cdot I \cdot \sin(\theta - 2n\pi/3)/\{K \cdot \sin(\theta - 2n\pi/3) + E_n\} \qquad (5)$$

Cn determined by Formula (5) for each phase is the correction value to be added to the electromagnet current value of each phase.

Next, Formula (5) is further studied.

In Formula (5), θ is determined from the detection result of motor rotor rotation angle detecting means provided on the motor.

Also, an induced voltage Vn (= induced voltage constant × angular velocity ω) of each phase is detected during motor rotation, and by dividing the detected value by the detection result ω of angular velocity detecting means, K·sin(θ-2nπ/3)+En is determined. By subtracting the design value of K·sin(θ-2nπ/3), which is known, from this determined value, En is determined.

That is to say, En is expressed by Formula (6).

$$E_n = V_n/\omega - K \cdot \sin(\theta\text{-}2n\pi/3) \qquad (6)$$

By considering that K and I are known design values, the correction value Cn is determined by the above calculation and Formula (5). By adding this Cn to the electromagnet current value, Formula (2) expressing the torque generated by the actual motor is reduced to Formula (7), and the term expressing torque pulsation is eliminated.

$$T = \sum_{n=0}^{2}\{K \cdot \sin(\theta - 2n\,\pi/3) + E_n\}\{I \cdot \sin(\theta - 2n\,\pi/3) + C_n\} = (3/2)K \cdot I \quad \cdots \quad (7)$$

Next, a motor control system 1 in accordance with this embodiment is explained.

FIG. 1 is a schematic view showing a functional configuration of the motor control system 1 in accordance with this embodiment. FIG. 1 shows the mutual relationship between functions of the motor control system 1, and does not necessarily show an actual circuit configuration.

FIG. 1 also shows a motor section 3 that is controlled by the motor control system 1.

The motor section 3 consists of a DC brushless motor driven by a three-phase sine-wave current, and the rotation thereof is controlled by the motor control system 1.

Although the detailed construction is described later, the motor section 3 is provided with electromagnets symmetrically with respect to the rotation axis on the stator side, and motor windings 5a, 5b and 5c are wound thereon. The motor windings 5a, 5b and 5c are not connected in series, but are independent, so that the electric current of each phase flows independently. Each of the motor windings 5a, 5b and 5c is supplied with sine-wave current of U phase, V phase, and W phase, and the electromagnet is excited by this sine-wave current.

On the other hand, on the motor rotor side, a permanent magnet 8 is installed, and magnetic poles of the N Pole and S pole are formed around the motor rotor.

When a three-phase alternating current is supplied to the motor windings 5a, 5b and 5c, a rotating magnetic field is generated around the permanent magnet 8, and this rotating magnetic field attracts the permanent magnet 8 to rotate the motor rotor.

Further, the motor section 3 is provided with a rotation angle sensor 9 (rotation angle detecting means) so that the rotation angle of the motor rotor can be detected. The rotation angle sensor 9 is formed, for example, by a rotary encoder.

This embodiment is configured so that an angular velocity of the motor rotor is calculated from the change in rotation angle with time detected by the rotation angle sensor 9 (angular velocity detecting means). However, the present invention is not limited to this configuration. A sensor for directly detecting the angular velocity of the motor rotor may be mounted on the motor section 3.

A rotation angle detector 11 detects the rotation angle of the motor rotor from the output of the rotation angle sensor 9, converts the detected rotation angle into a digital signal, and sends the signal to a current controller 18.

Resistors 6a, 6b and 6c, each of which has an equal resistance value, are analogously connected to the motor windings 5a, 5b and 5c.

By detecting the voltages generated in the resistors 6a, 6b and 6c provided in this manner, the induced voltages generated in the motor windings 5a, 5b and 5c can be detected (induced voltage acquiring means).

An A/D converter 10 samples the current value in the motor winding 5a, 5b, 5c of each phase and the induced voltage generated in the motor winding 5a, 5b, 5c at predetermined time intervals, converts the sampled value into digital data, and sends the data to the current controller 18.

The current controller 18 is made up of an operation part 15, a RAM 12, a ROM 13, a D/A converter 14, and the like.

The operation part 15 is an arithmetic unit for performing arithmetic processing on the basis of various programs stored in the ROM 13. As described later, the operation part 15 calculates the corrected current command value at predetermined time intervals along with the rotation of motor rotor, and outputs the calculated value.

The RAM 12 provides a working area where the operation part 15 performs arithmetic processing.

The operation part 15 outputs the calculated current command value to the D/A converter 14 in a form of digital signal. The D/A converter 14 converts the digital signal into an analog signal, and outputs the current command value to an amplifier 16 as a voltage (sine-wave current supplying means).

In this embodiment, the operation part 15 is formed, for example, by a microcomputer. However, the present invention is not limited to this configuration. The operation part 15 can be configured by using another arithmetic unit such as a digital signal processor (DSP) capable of performing high-speed arithmetic processing.

The amplifier 16 supplies a current according to the current command value received from the D/A converter 14 to the motor windings 5a, 5b and 5c.

Here, the function of the operation part 15 is explained in more detail.

The ROM 13, which is nonvolatile read-only memory that stores programs and data, stores programs for allowing the operation part 15 to perform a current command value acquiring function, a correction value calculating function, an electromagnet current correcting function, and other functions.

By performing the current command value acquiring function, the operation part 15 carries out the processing as described below at predetermined time intervals.

First, the rotation angle $\theta$ of motor rotor (position of magnetic poles of the permanent magnet 8) is acquired by a signal sent from the rotation angle detector 11.

Then, the current command value (before correction) for the motor winding 5a, 5b, 5c according to the acquired $\theta$ is acquired. The current command value according to $\theta$ to be output to the motor winding 5a, 5b, 5c is stored in the ROM 13. The operation part 15 reads the current command value from the ROM 13 and outputs it. Alternatively, the configuration may be such that the operation part 15 arithmetically processes the current command value in accordance with $\theta$. The electromagnet current command value is a three-phase sine-wave current according to $\theta$.

By performing the correction value calculating function, the operation part 15 carries out the processing as described below at predetermined time intervals (correction current value calculating means).

First, the rotation angle $\theta$ of motor rotor acquired from the rotation angle detector 11 is differentiated with respect to time to calculate the angular velocity $\omega$ of motor rotor.

Also, the induced voltage of the motor winding of 5a, 5b, 5c is acquired from the A/D converter 10.

Values that are known in advance, such as the design value of $K \cdot \sin(\theta - 2n\pi/3)$, are used because they are stored in the ROM 13 according to $\theta$.

By using these acquired values, the calculation shown in Formulas (5) and (6) is made to obtain Cn (n = 0, 1, 2). Thereby, Cn (n = 0, 1, 2) at the present $\theta$ can be obtained.

By performing the electromagnet current correcting function, the operation part 15 carries out the processing as described below (correcting means).

First, the current command value before correction of each phase is acquired by the current command value acquiring function. Next, after the correction value of each phase for $\theta$ at this time is calculated by the correction value calculating function, and the correction value is added to the current command value before correction to correct the current command value of each phase. Then, the corrected current command value obtained by the correction is output to the D/A converter 14.

In this case, since the amplifier 16 supplies the corrected electromagnet current to the motor section 3, the torque of motor rotor is constant.

The operation part 15 carries out the above-described correction processing at predetermined time intervals. As the predetermined time, for example, the sampling period of the A/D converter 10 and the arithmetic processing period of microcomputer or DSP constituting the operation part 15 can be cited.

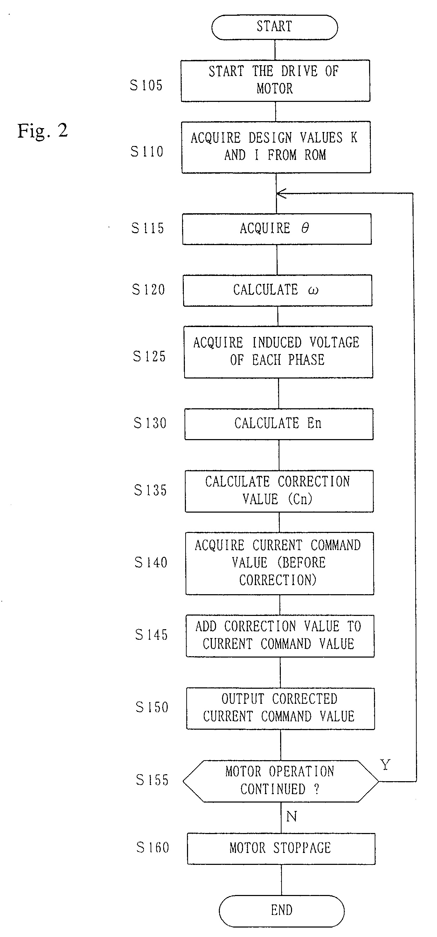

FIG. 2 is a flowchart for illustrating a procedure for the operation part 15 to calculate the corrected current command value.

First, the operation part 15 begins to drive the motor section 3 (Step S105).

Next, the operation part 15 acquires the design values K and I from the ROM 13 (Step S110).

Next, the operation part 15 acquires $\theta$ from the rotation angle detector 11 (Step S115).

Then, the operation part 15 calculates $\omega$ from the change in $\theta$ with time (for example, a plurality of $\theta$ values are sampled, and $\omega$ is determined from their change with time) (Step S120). In this embodiment, the configuration is such that the detected $\theta$ is used to calculate $\omega$. However, the present invention is not limited to this configuration. The angular velocity $\omega$ may be directly measured by using a sensor for detecting $\omega$. If $\omega$ is directly measured, the time for calculating $\omega$ can be omitted, so that the speed of processing can be increased.

Next, the operation part 15 acquires the induced voltage of the motor winding of 5a, 5b, 5c from the A/D converter 10 (Step S125), and calculates an error En of each phase by Formula (6) using the induced voltage acquired in Step S125, $\theta$ acquired in Step S115, $\omega$ calculated in Step S120, and K acquired in Step 110 (Step S130).

Next, the operation part 15 calculates the correction value Cn of each phase by Formula (5) using En calculated in Step S130, θ acquired in Step S115, and K and I acquired in Step 110 (Step S135).

Next, the operation part 15 reads the current command value before correction of each phase from the ROM 13 (Step S140).

Next, the operation part 15 adds the correction value calculated in Step S135 to the current command value before correction for each phase (Step S145).

Next, the operation part 15 outputs the corrected current command value to the D/A converter 14 (Step S150).

Next, if the operation of the motor section 3 is continued (Step S155; Y), the processing returns to Step S115, and if the operation of the motor section 3 is stopped (Step S155; N), the motor section 3 is stopped (Step S160), and thus the operation is stopped.

The following is an explanation of the motor section 3 constructed as described above and a molecular pump that is driven by using the motor control system 1.

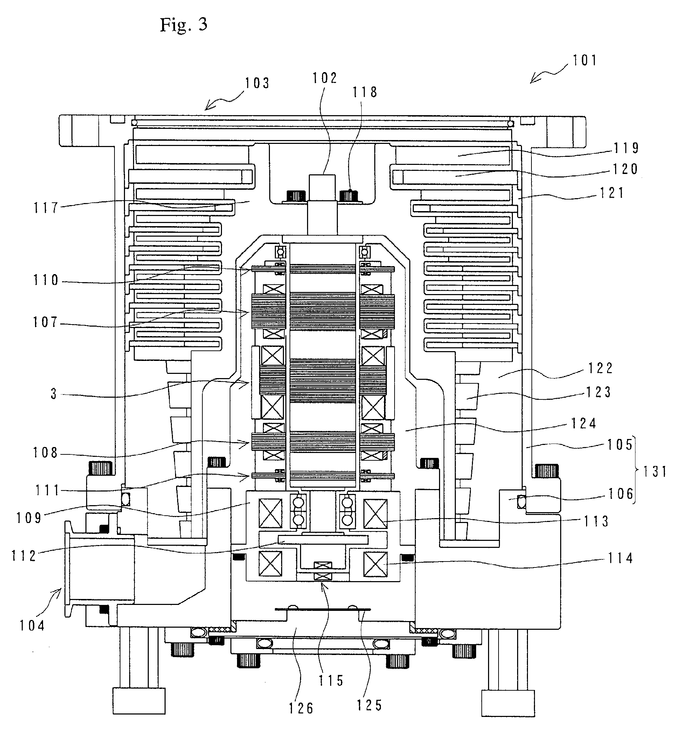

FIG. 3 is a sectional view showing a construction of a molecular pump 101 in accordance with an embodiment, the view showing a cross section in the axial direction of a rotor shaft 102.

The molecular pump 101 has a casing 105 formed into a cylindrical shape, and the rotor shaft 102 is provided in the center of the casing 105. The casing 105 forms a housing 131 of the molecular pump 101 together with a base 106.

At the upper, lower, and bottom parts in the axial direction of the rotor shaft 102, magnetic bearing sections 107, 108 and 109 are provided, respectively. The rotor shaft 102 is supported in a non-contact manner in the radial direction (the radial direction of the rotor shaft 102) by the magnetic bearing sections 107 and 108, and is supported in a non-contact manner in the thrust direction (the axial direction of the rotor shaft 102) by the magnetic bearing section 109. These magnetic bearing sections 107, 108 and 109 form a magnetic bearing of what is called a five-axis control type, and the rotor shaft 102 has the degree of freedom of rotation around the axis of the rotor shaft 102.

In the magnetic bearing section 107, four electromagnets are arranged around the rotor shaft 102 so as to be opposed to each other every 90 degrees. The rotor shaft 102, which is formed of a material having high magnetic permeability (for example, iron), is attracted by magnetic force of these electromagnets.

A displacement sensor 110 detects radial displacement of the rotor shaft 102. A control section, not shown, operates so that when displacement of the rotor shaft 102 in the radial direction from a predetermined position is detected by a displacement signal sent from the displacement sensor 110, the magnetic force of each electromagnet is regulated to return the rotor shaft 102 to the predetermined position. Thus, the magnetic force of electromagnet is regulated by the feedback control of the exciting current of each electromagnet.

The control section, not shown, feedback controls the magnetic force of the magnetic bearing section 107 by the signal of the displacement sensor 110. Thereby, the rotor shaft 102 magnetically levitates in the radial direction with a predetermined clearance being provided from the electromagnets at the magnetic bearing section 107, and is held in the air in a non-contact manner.

The construction and operation of the magnetic bearing section 108 is the same as those of the magnetic bearing section 107.

In the magnetic bearing section 108, four electromagnets are arranged around the rotor shaft 102 every 90 degrees. The rotor shaft 102 is held in the radial direction in a non-contact manner at the magnetic bearing section 108 by the attraction force of magnetic force of these electromagnets.

A displacement sensor 111 detects radial displacement of the rotor shaft 102.

The control section, not shown, operates so that upon receipt of a signal of radial displacement of the rotor shaft 102 from the displacement sensor 111, the exciting current of electromagnet is feedback controlled so that the displacement is corrected and the rotor shaft 102 is held at a predetermined position.

The control section feedback controls the magnetic force of the magnetic bearing section 108 on the basis of the signal of the displacement sensor 111. Thereby, the rotor shaft 102 magnetically levitates in the radial direction with a predetermined clearance being provided from the electromagnets at the magnetic bearing section 108, and is held in the air in a non-contact manner.

Thus, the rotor shaft 102 is held in the radial direction at two locations of the magnetic bearing sections 107 and 108.

The magnetic bearing section 109 provided at the lower end of the rotor shaft 102, which includes a disk-shaped metallic disk 112, electromagnets 113 and 114, and a displacement sensor 115, holds the rotor shaft 102 in the thrust direction.

The metallic disk 112, which is formed of a material having high magnetic permeability, such as iron, is perpendicularly fixed to the rotor shaft 102 at the center thereof. The electromagnet 113 is disposed above the metallic disk 112, and the electromagnet 114 is disposed below the metallic disk 112. The electromagnet 113 attracts the metallic disk 112 upward by means of the magnetic force, and the electromagnet 114 attracts the metallic disk 112 downward. The control section properly regulates the magnetic force applied to the magnetic disk 112 by the electromagnets 113 and 114, and thereby magnetically levitates the rotor shaft 102 in the thrust direction to hold it in the air in a non-contact manner.

The displacement sensor 115 detects displacement in the thrust direction of the rotor shaft 102, and sends it to the control section, not shown. The control section detects displacement in the thrust direction of the rotor shaft 102 on the basis of the displacement detection signal sent from the displacement sensor 115.

When the rotor shaft 102 moves to either side in the thrust direction and is displaced from a predetermined position, the control section operates so as to feedback control the exciting current of the electromagnets 113 and 114 so as to correct this displacement, and to regulate the magnetic force to return the rotor shaft 102 to the predetermined position. The control section continuously carries out this feedback control, by which the rotor shaft 102 is magnetically levitated in the thrust direction at the predetermined position and is held.

As described above, the rotor shaft 102 is held in the radial direction by the magnetic bearing sections 107 and 108, and is held in the thrust direction by the magnetic bearing section 109, so that the rotor shaft 102 has the degree of freedom of rotation around the axis.

On the rotor shaft 102, the motor section 3 is provided between the magnetic bearing sections 107 and 108. In this embodiment, as one example, the motor section 3 is a DC brushless motor constructed as described below.

In the motor section 3, the permanent magnet 8 is fixed around the rotor shaft 102. The permanent magnet 8 is fixed around the rotor shaft 102 so that, for example, the N pole and S pole are arranged every 180 degrees. Thus, in the motor section 3, the rotor shaft 102 constitutes the motor rotor.

Around the permanent magnet 8, for example, six electromagnets are arranged every 60 degrees so as to be symmetrically opposed with respect to the axis of the rotor shaft 102 with a predetermined clearance being provided from the rotor shaft 102. On the electromagnet, the motor winding 5a, 5b, 5c is wound, so that the electromagnet is excited by the current of U phase, V phase, and W phase supplied to the winding motor 5a, 5b, 5c.

More specifically, of the six electromagnets, the electromagnets opposed to each other with the rotor shaft 102 being held therebetween form three sets of electromagnets, and the current of U phase, V phase, and W phase is supplied to each set thereof.

Also, at the lower end of the rotor shaft 102, the rotation angle sensor 9, not shown in FIG. 3, is provided. Thereby, the motor control system 1 can detect the rotation angle of the rotor shaft 102.

At the upper end of the rotor shaft 102, a rotor 117 is installed with a plurality of bolts 118.

As described below, a portion of the rotor 117 on the suction port 103 side substantially from the midpoint, that is, the upper portion in the figure forms a molecular pump portion, and the lower portion in the figure substantially from the midpoint, that is, the portion on the discharge port 104 side forms a thread groove pump section.

In the molecular pump section located on the suction port 103 side of the rotor 117, a plurality of stages of rotor blades 119 are radially installed from the rotor 117 so as to be inclined through a predetermined angle from a plane perpendicular to the axis of the rotor shaft 102. The rotor blades 119 are fixed to the rotor 117, and are configured so as to rotate at a high speed together with the rotor shaft 102.

On the suction port 103 side of the casing 105, stator blades 120 are disposed toward the inside of the casing 105 alternately with respect to the rotor blades 119 so as to be inclined through a predetermined angle from a plane perpendicular to the axis of the rotor shaft 102.

When the rotor 117 is driven by the motor section 3 and is rotated together with the rotor shaft 102, exhaust gas is sucked through the suction port 103 by the action of the rotor blades 119 and the stator blades 120.

The exhaust gas sucked through the suction port 103 passes between the rotor blades 119 and the stator blades 120, and is transferred to the thread groove pump section formed in the lower-half portion in the figure. At this time, the temperature of the rotor blade 119 is raised by the friction between the rotor blade 119 and the exhaust gas or the conduction of heat generated in the motor section 3. However, this heat is conducted to the stator blade 120 by radiation or gas molecules of exhaust gas.

A spacer 121, which is a ring-shaped member, is formed of a metal such as aluminum, iron, stainless steel, or copper, or a metal such as an alloy containing these metals as a component.

The spacer 121 is interposed between the stages of the stator blades 120 to keep the stages formed by the stator blades 120 at a predetermined interval, and keeps the stator blades 120 at predetermined positions.

The spacers 121 are connected to each other at the outer peripheral portion so as to form a heat conduction path for conducting heat received by the stator blade 120 from the rotor blade 119 and heat generated by the friction between the exhaust gas and the stator blade 120.

The thread groove pump section formed on the discharge port 104 side of the rotor 117 is formed by the rotor 117 and a thread groove spacer 122.

The thread groove spacer 122 is a cylindrical member formed of aluminum, iron, stainless steel, or copper, or a metal such as an alloy containing these metals as a component. In the inner peripheral surface of the thread groove spacer 122, a plurality of spiral thread grooves 123 are formed.

The direction of the spiral of the thread groove 123 is a direction such that when the molecules of exhaust gas move in the direction of rotation of the rotor 117, the molecules are transferred toward the discharge port 104.

When the rotor 117 is driven by the motor section 3 and is rotated, exhaust gas is transferred from the molecular pump section in the upper-half portion in the figure to the thread groove pump section. The transferred exhaust gas is transferred toward the discharge port 104 while being guided by the thread grooves 123.

In an opening portion at the bottom of the base 106, a back cover 126 is installed.

The back cover 126 is provided with an in-pump board 125. On the in-pump board 125, a storage unit is mounted to store, for example, the operating time of the molecular pump 101, the error history, and the like, the storage unit being used for maintenance of the molecular pump 101.

The above is a description of the motor control system 1 in accordance with this embodiment. For the molecular pump 1, since the rotor shaft 102 is supported by using the magnetic bearings, the support rigidity of rotor shaft is low as compared with the case where the ball bearing is used. Therefore, in the motor section 3, the clearance between the motor rotor and the electromagnet may be varied by unbalanced force of rotor or by any other cause during the rotation of rotor. In this case, the influence exerted by the variation in the clearance appears as the error En of K·sin(θ-2nπ/3).

The motor control system 1 can be applied to a motor other then the three-phase motor. For example, in the case of a two-phase motor, Formula (5) is reduced to Formula (8).

$$C_n = -E_n \cdot I \cdot \sin(\theta - n\,\pi)\,/\{K \cdot \sin(\theta - n\pi) + E_n\} \qquad (8)$$

where, n = 0 and 1. Also, further generally, in the case of an N-phase motor, Formula (5) is reduced to Formula (9).

$$C_n = -E_n \cdot I \cdot \sin(\theta - 2n\pi/N)/\{K \cdot \sin(\theta - 2n\pi/N) + E_n\} \qquad (9)$$

where, n = 0, 1, ... , and N-1.

Furthermore, although not shown in the figure, the motor control system 1 is configured so that a plural number (k) of electromagnets are arranged for each phase with the rotor shaft 102 being held therebetween, the motor windings are not connected in series but are connected so that a current flows independently for each electromagnet, and induced voltage detecting means detects an induced voltage for each electromagnet. In this configuration, if a correction value Cnj is added to the current value for each electromagnet as expressed by Formula (10) in the same way as described above, reactions of radial forces applied to the rotor shaft 102 by the opposed electromagnets, for example, a reaction of a radial force F1 applied to the rotor shaft 102 by an electromagnet of 1 and a reaction of a radial force F2 applied to the rotor shaft 102 by the electromagnet opposed to the electromagnet of 1 are canceled each other with high accuracy because the magnitudes of the reactions are equal accurately and the directions thereof are opposite to each other. Since all opposed electromagnets meet this condition, the vibrations in the radial direction of the stator are reduced.

$$T_n = \sum_{j=1}^{k} \{K_j \cdot \sin(\theta - 2n\,\pi/3) + E_{nj}\}\{I_j \cdot \sin(\theta - 2n\,\pi/3) + C_{nj}\} \quad \cdots \quad (1\,0)$$

where, j = 1, 2, ... , and k.

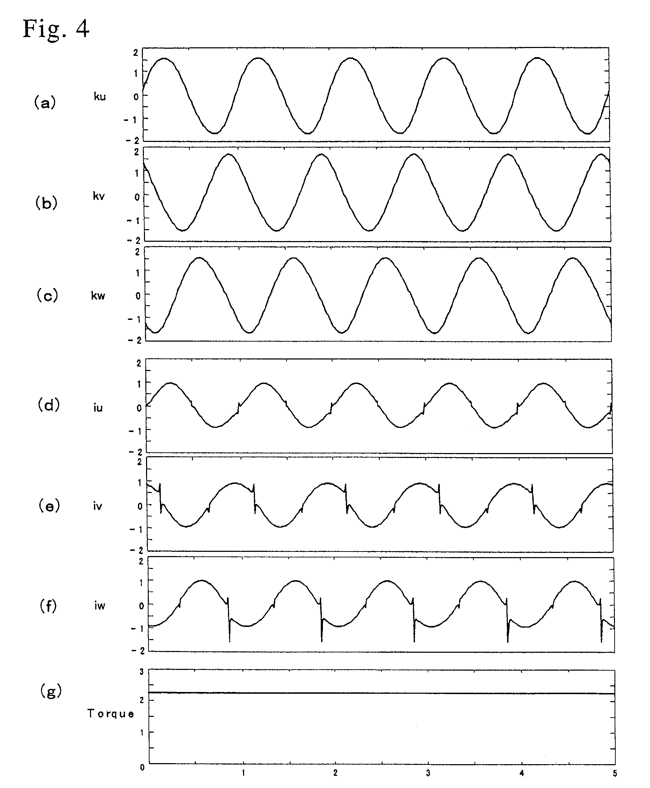

FIG. 4 is a waveform diagram in the case where the motor section 3 is driven by using the motor control system 1 of this embodiment.

FIGS. 4(a) to 4(c) are waveform diagrams showing induced voltages of the motor windings 5a, 5b and 5c before the current is corrected. As shown in these figures, the waveforms are sinusoidal waves shifting by 2π/3. However, these waveforms are not correct sinusoidal waves, but include an error as described above.

FIGS. 4(d) to 4(f) are waveform diagrams showing the corrected electromagnet currents supplied to the motor windings 5a, 5b and 5c. As shown in the figures, the currents of all phases have a ripple-shaped portion, and their waveforms have a form shifting from the sinusoidal wave. This is because the correction value is added to the current of each phase.

FIG. 4(g) is a waveform diagram showing torque generated by the motor section 3 when the motor section 3 is operated by the corrected electromagnet current. As shown in this figure, the torque has a fixed value.

This embodiment described above can achieve effects as described below.

The vibrations generated by the DC brushless motor are significantly reduced not only at the early stage after manufacture but also after time change due to demagnetization etc. Therefore, the application of this embodiment significantly reduces the vibrations of the molecular pump 101 using the DC brushless motor. Also, it improves the disturbance of image of an electron microscope etc. using the molecular pump 101, and contributes to the increase in resolution.

(Modified example)

Next, a modified example of this embodiment will be described. In this modified example, the configurations of the current controller 18, the motor section 3, and the like are the same as those in the embodiment, so that explanation is given by applying the same reference numerals to the corresponding elements.

In the above-described embodiment, the current controller 18 calculates the correction value in real time while the motor section 3 is driven, and the current command value is corrected. On the other hand, in this modified example, the correction value is calculated for each predetermined angle at the time when the motor section 3 is driven, and the calculated correction value is stored in the RAM 12. The operation part 15 corrects the current command value before correction, which is read from the ROM 13, by using the correction value stored in the RAM 12, and outputs the corrected current command value to the D/A converter 14.

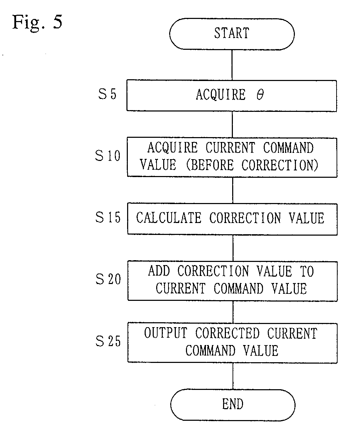

FIG. 5 is a flowchart for illustrating a procedure for the operation part 15 to calculate the corrected current command value. It is assumed that the correction value for each phase at each predetermined angle has been stored in the RAM 12.

The operation part 15 performs the following processing for each predetermined angle continuously.

First, the operation part 15 acquires θ from the rotation angle detector 11 to identify the position of magnetic pole of the permanent magnet 8 (Step S5), and checks whether or not θ is a predetermined angle.

If θ is the predetermined angle, the operation part 15 acquires the current command value (before correction) of each phase corresponding to this θ value from the ROM 13 (Step S10).

Next, the operation part 15 acquires the current command value of each phase corresponding to θ acquired in Step S5 from the RAM 12 (Step S15).

Next, the operation part 15 adds the correction value acquired in Step S15 to the current command value acquired in Step S10 for each phase, and acquires the corrected current command value (Step S20).

Next, the operation part 15 outputs the corrected current command value to the D/A converter 14 (Step S25), by which the processing is finished. After finishing the processing concerning this θ value, the operation part 15 performs the same processing concerning θ sampled next. The operation part 15 continues the processing during the time when the motor section 3 is operated.

On the other hand, the D/A converter 14 converts the corrected current command value output from the operation part 15 into an analog signal, and outputs this signal to the amplifier 16. The amplifier 16 carries out control so that the current value of current flowing in each of the motor windings 5a, 5b and 5c is equal to the current command value output by the D/A converter 14.

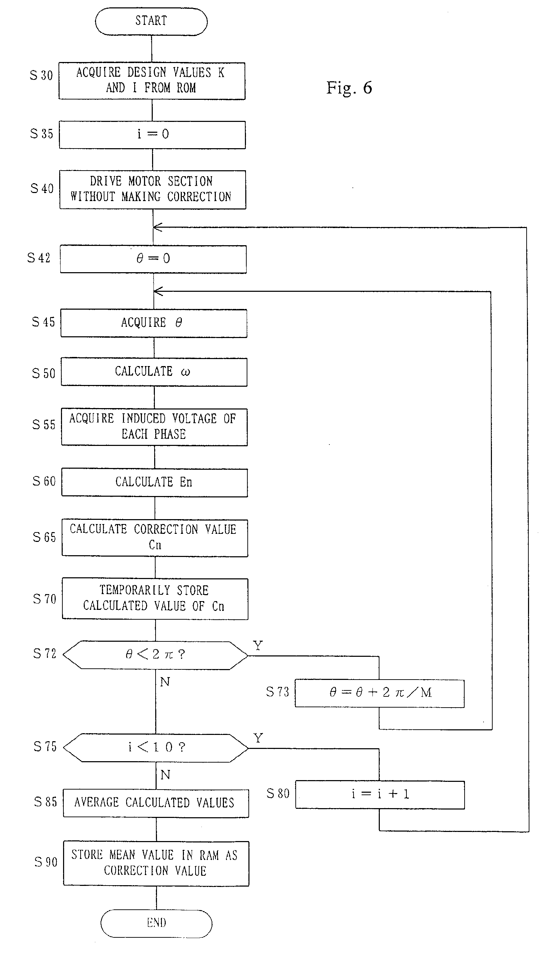

Next, a procedure for the operation part 15 to calculate the correction value Cn will be described with reference to a flowchart of FIG. 6.

This processing is performed when the motor section 3 is started.

First, the operation part 15 acquires the design values K and I from the ROM 13 (Step S30).

Next, a counter i is set to 0 (Step S35). The counter i is used to count the number of measuring steps because the correction value is measured plural number of times and the mean value is obtained.

Next, the operation part 15 drives the motor section 3 without making correction (Step S40).

Next, the operation part 15 detects a point of time when θ becomes 0 from the signal sent from the rotation angle detector 11 (Step S42). From this point of time, the acquisition of correction value for each θ is started.

Next, the operation part 15 acquires θ from the rotation angle detector 11 (Step S45).

Next, the operation part 15 calculates ω from the change in θ with time (for example, a plurality of θ values are sampled, and ω is determined from their change with time) (Step S50). In this embodiment, the configuration is such that the detected θ value is used to calculate ω. However, the present invention is not limited to this configuration. The angular velocity ω may be directly measured by using a sensor for detecting ω. If ω is directly measured, the time for calculating ω can be omitted, so that the speed of processing can be increased.

Next, the operation part 15 acquires the induced voltage of the motor winding of 5a, 5b, 5c from the A/D converter 10 (Step S55), and calculates the error En of each phase by Formula (6) using the induced voltage acquired in Step S55, θ acquired in Step S45, ω calculated in Step S50, and K acquired in Step S30 (Step S60).

Next, the operation part 15 calculates the correction value Cn of each phase by Formula (5) using En calculated in Step S60, θ acquired in Step S45, and K and I acquired in Step 30 (Step S65), and temporarily stores the calculated Cn value in the RAM 12 (Step S70).

Next, the operation part 15 judges whether or not θ is smaller than $2\pi$ (Step S72). If θ is smaller than $2\pi$ (Step S72; Y), $2\pi/M$ is added to θ to update θ (Step S73), and the processing returns to Step 45. Here, M means that 360 degrees are divided by M, and $\theta + (2\pi/M)\cdot N$ (where, N = 0, 1, ... , and M-1) becomes the predetermined angle.

In Step S45, processing is started when the output from the rotation angle detector 11 reaches the updated $\theta$ value.

If it is judged in Step S72 that $\theta$ is not smaller than $2\pi$ (Step S72; N), the operation part 15 transfers the processing to Step 75.

Thus, the motor control system 1 calculates the correction value Cn of each phase corresponding to $\theta$ every $2\pi/M$ from 0 to $2\pi$, and stores the calculated correction values Cn in the RAM 12.

Next, the operation part 15 judges whether or not i is less than 10 (Step 75). If i is less than 10 (Step S75; Y), the operation part 15 increments i by 1 (Step S80), and returns to the processing in Step S45. If i is not less than 10 (Step S75; N), the operation part 15 determines the sum for each $\theta$ of the calculated correction values stored temporarily in the RAM 12, and divides the sum by the number of repetitions of calculation of correction value (here, 10 times) to determine the mean value of the correction values of each phase (Step S85).

Next, the operation part 15 stores this mean value in the RAM 12 as the correction value used when the motor section 3 is operated (Step S90), by which the processing is finished.

The above-described measurement may be made after the motor section 3 has reached steady-state rotation or during the time when the motor section 3 reaches steady-state rotation.

The correction value Cn obtained by the above procedure is used during the time when the motor section 3 is operated, and is erased from the RAM 12 when the operation of the motor section 3 finishes. When the motor section 3 is started again next time, the operation part 15 newly calculates a correction value and stores it in the RAM 12. Such a configuration in which the correction value is acquired each time the motor section 3 is started can respond to a case where the error En is changed by the time change of the motor section 3.

In this modified example, the configuration is such that at the time of start of the motor section 3, the correction value is measured in advance and is stored in the RAM 12. However, the present invention is not limited to this configuration. The configuration may be such that the correction value is calculated at predetermined time intervals while the motor section 3 is driven, and the motor section 3 is operated while the correction value is updated.

Also, the configuration may be such that the correction value is measured in advance at the time of shipment from factory, and is stored in the ROM 13. In this case, it is difficult to respond to the time change of the motor section 3. On the other hand, the motor control system 1 need not be mounted with elements for calculating the correction value (the resistors 6a, 6b and 6c, the A/D converter 10, etc.), so that the cost can be reduced. In applications where the occurrence of vibrations due to the time change of the motor section 3 poses no problem, the motor control system 1 can be configured in this manner.

The above is a description of one embodiment of the present invention. However, the present invention is not limited to the above-described embodiment, and various changes and modifications can be made without departing from the spirit and scope of the following claims.

For example, in the above-described embodiment, the current command value before correction and the current command value after correction are generated by the operation part 15. However, the configuration can be such that the current command value before correction is generated by another element, and the correction value calculated by the operation part 15 is added to the current command value before correction.

Also, in this embodiment, explanation has been given of the case where the DC brushless motor is driven in the sinusoidal drive system. However, the present invention can be applied to, for example, a pseudo sinusoidal drive current or the like.

**Claims**

1. A motor control system which controls a motor having a motor rotor formed with magnetic poles of a predetermined number of poles, and an electromagnet which is disposed around the motor rotor and on which a motor winding is wound, comprising:

   rotation angle detecting means for detecting a rotation angle of the motor rotor;
   current supplying means for supplying an electric current of predetermined phase number according to the detected rotation angle to the motor winding; and
   correcting means for correcting the electric current supplied to the motor winding by said current supplying means using a correction current value corresponding to the rotation angle of the motor rotor, which compensates a difference between torque generated by the motor rotor and a theoretical value of the torque.

2. The motor control system according to claim 1, wherein a plurality of the electromagnets are present for each phase;
   the electromagnets are supplied with the electric current independently from said current supplying means;

and

said correcting means corrects the electric current for each of the electromagnets.

**3.** The motor control system according to claim 1 or 2, wherein said correcting means adds the correction current value corresponding to the detected rotation angle to the electric current.

**4.** The motor control system according to any one of claims 1 to 3, further comprising:

storage means for storing the correction current value corresponding to the rotation angle of the motor rotor,

wherein said correcting means acquires the correction current value corresponding to the detected rotation angle from said storage means and adds the acquired correction current value to the electric current.

**5.** The motor control system according to any one of claims 1 to 4, further comprising:

induced voltage acquiring means for acquiring an induced voltage of the motor winding of each phase; and correction current value calculating means for calculating the correction current value corresponding to the rotation angle of the motor rotor of each phase,

wherein said correction current value calculating means calculates the correction current value using the acquired induced voltage.

**6.** The motor control system according to claim 5, further comprising:

angular velocity acquiring means for acquiring an angular velocity of the motor rotor,

wherein said correction current value calculating means calculates the correction current value $C_n$ of the n-th phase by a formula of $C_n = -E_n \cdot I_n/(F_n+E_n)$, where

n is an integer value from 0 to N-1 for the electric current of N phase, where N is an integer of 2 or more;

$E_n$ is a value calculated by a formula of $E_n = V_n/\omega-F_n$, where $\omega$ is the angular velocity acquired by said angular velocity acquiring means, $V_n$ is the induced voltage of each phase n acquired by said induced voltage acquiring means, and $F_n$ is a theoretical value of an induced voltage constant of each phase n corresponding to the rotation angle of the motor rotor; and

$I_n$ is the electric current value of each phase n corresponding to the rotation angle of the motor rotor.

**7.** A motor apparatus comprising:

a motor rotor formed with magnetic poles of a predetermined number of poles;

an electromagnet which is disposed around said motor rotor and on which a motor winding is wound; and

the motor control system according to any one of claims 1 to 6 for supplying an electric current of predetermined phase number to said motor winding.

**8.** A vacuum pump comprising:

a housing having a cylindrical shape;

a pump stator provided at the inner periphery of said housing;

a rotating shaft pivotally supported so as to be rotatable relatively to said housing and said pump stator;

a pump rotor to which said rotating shaft is fixedly provided and which is provided on the inner periphery side of said pump stator; and

the motor apparatus according to claim 7 for rotating said pump rotor.

**9.** A correction current value measuring apparatus for acquiring a correction current value for correcting an electric current of predetermined phase number supplied to a motor having a motor rotor formed with magnetic poles of a predetermined number of poles=, and an electromagnet which is disposed around the motor rotor and on which a motor winding is wound, comprising:

rotation angle detecting means for detecting a rotation angle of the motor rotor;

induced voltage acquiring means for acquiring an induced voltage of the motor winding of each phase so as to correspond to the detected rotation angle;

correction current value calculating means for calculating a correction current value corresponding to the rotation angle of the motor rotor, which compensates a difference between torque generated by the motor rotor and a theoretical value of said torque, using the acquired induced voltage; and

output means for outputting the calculated correction current value.

10. The correction current value measuring apparatus according to claim 9, further comprising:

angular velocity acquiring means for acquiring the angular velocity of the motor rotor,

wherein said correction current value calculating means calculates the correction current value $C_n$ of the n-th phase by a formula of $C_n = -E_n \cdot I_n/(F_n+E_n)$, where

n is an integer value from 0 to N-1 for the electric current of N phase, where N is an integer of 2 or more;

$E_n$ is a value calculated by a formula of $E_n = V_n/\omega - F_n$, where $\omega$ is the angular velocity acquired by said angular velocity acquiring means, $V_n$ is the induced voltage of each phase n acquired by said induced voltage acquiring means, and $F_n$ is a theoretical value of an induced voltage constant of each phase n corresponding to the rotation angle of the motor rotor; and

$I_n$ is the electric current value of each phase n corresponding to the rotation angle of the motor rotor.

11. A motor control method for controlling a motor having a motor rotor formed with magnetic poles of a predetermined number of poles, and an electromagnet which is disposed around the motor rotor and on which a motor winding is wound, comprising, in a motor control system having rotation angle detecting means, current supplying means, and correcting means:

a rotation angle detecting step of detecting a rotation angle of the motor rotor by using the rotation angle detecting means;

a current supplying step of supplying an electric current of predetermined phase number according to the detected rotation angle to the motor winding by using the current supplying means; and

a correcting step of correcting the electric current supplied to the motor winding by the current supplying means using a correction current value corresponding to the rotation angle of the motor rotor, which compensates a difference between torque generated by the motor rotor and a theoretical value of the torque, by using the correcting means.

**Fig. 1**

EP 1 489 321 A1

Fig. 2

```
                    ┌─────────────┐
                    │    START    │
                    └──────┬──────┘
                           │
          ┌────────────────────────────────┐
S 105     │   START THE DRIVE OF           │
          │          MOTOR                 │
          └────────────────┬───────────────┘
                           │
          ┌────────────────────────────────┐
S 110     │   ACQUIRE DESIGN VALUES K       │
          │      AND I FROM ROM             │
          └────────────────┬───────────────┘
                           │ ◄──────────────┐
          ┌────────────────────────────────┐│
S 115     │          ACQUIRE  θ            ││
          └────────────────┬───────────────┘│
                           │                 │
          ┌────────────────────────────────┐│
S 120     │        CALCULATE  ω            ││
          └────────────────┬───────────────┘│
                           │                 │
          ┌────────────────────────────────┐│
S 125     │   ACQUIRE INDUCED VOLTAGE      ││
          │      OF EACH PHASE             ││
          └────────────────┬───────────────┘│
                           │                 │
          ┌────────────────────────────────┐│
S 130     │        CALCULATE En            ││
          └────────────────┬───────────────┘│
                           │                 │
          ┌────────────────────────────────┐│
S 135     │   CALCULATE CORRECTION         ││
          │       VALUE (Cn)               ││
          └────────────────┬───────────────┘│
                           │                 │
          ┌────────────────────────────────┐│
S 140     │   ACQUIRE CURRENT COMMAND      ││
          │      VALUE (BEFORE             ││
          │       CORRECTION)              ││
          └────────────────┬───────────────┘│
                           │                 │
          ┌────────────────────────────────┐│
S 145     │   ADD CORRECTION VALUE TO      ││
          │   CURRENT COMMAND VALUE        ││
          └────────────────┬───────────────┘│
                           │                 │
          ┌────────────────────────────────┐│
S 150     │    OUTPUT CORRECTED            ││
          │   CURRENT COMMAND VALUE        ││
          └────────────────┬───────────────┘│
                           │               Y │
          ◇─────────────────────────────────┘
S 155     ◇   MOTOR OPERATION            ◇
          ◇     CONTINUED ?              ◇
          ◇─────────────────────────────◇
                           │ N
          ┌────────────────────────────────┐
S 160     │      MOTOR STOPPAGE            │
          └────────────────┬───────────────┘
                           │
                    ┌─────────────┐
                    │     END     │
                    └─────────────┘
```

Fig. 3

Fig. 4

(a)  ku

(b)  kv

(c)  kw

(d)  iu

(e)  iv

(f)  iw

(g)  Torque

Fig. 5

```
                    ┌──────────────┐
                    │    START     │
                    └──────┬───────┘
                           │
        ┌──────────────────┴──────────────────┐
  S 5   │             ACQUIRE  θ              │
        └──────────────────┬──────────────────┘
                           │
        ┌──────────────────┴──────────────────┐
  S 10  │     ACQUIRE CURRENT COMMAND          │
        │     VALUE (BEFORE CORRECTION)        │
        └──────────────────┬──────────────────┘
                           │
        ┌──────────────────┴──────────────────┐
  S 15  │      CALCULATE CORRECTION VALUE      │
        └──────────────────┬──────────────────┘
                           │
        ┌──────────────────┴──────────────────┐
  S 20  │     ADD CORRECTION VALUE TO          │
        │     CURRENT COMMAND VALUE            │
        └──────────────────┬──────────────────┘
                           │
        ┌──────────────────┴──────────────────┐
  S 25  │     OUTPUT CORRECTED CURRENT         │
        │     COMMAND VALUE                    │
        └──────────────────┬──────────────────┘
                           │
                    ┌──────┴───────┐
                    │     END      │
                    └──────────────┘
```

Fig. 6

START

S30 ACQUIRE DESIGN VALUES K AND I FROM ROM

S35 $i = 0$

S40 DRIVE MOTOR SECTION WITHOUT MAKING CORRECTION

S42 $\theta = 0$

S45 ACQUIRE $\theta$

S50 CALCULATE $\omega$

S55 ACQUIRE INDUCED VOLTAGE OF EACH PHASE

S60 CALCULATE En

S65 CALCULATE CORRECTION VALUE Cn

S70 TEMPORARILY STORE CALCULATED VALUE OF Cn

S72 $\theta < 2\pi$ ? — Y

S73 $\theta = \theta + 2\pi / M$

N

S75 $i < 10$ ? — Y

S80 $i = i + 1$

N

S85 AVERAGE CALCULATED VALUES

S90 STORE MEAN VALUE IN RAM AS CORRECTION VALUE

END

# Fig. 7

(a) ku

(b) kv

(c) kw

(d) iu

(e) iv

(f) iw

(g) Torque

PRIOR ART

**European Patent Office**

## EUROPEAN SEARCH REPORT

Application Number

EP 04 25 1754

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 236 130 B1 (AMRHEIN WOLFGANG ET AL) 22 May 2001 (2001-05-22) <br> * abstract * <br> * column 4, line 61 - column 5, line 17 * <br> * column 6, line 48 - column 8, line 7 * <br> * column 12, lines 45-49 * <br> * column 13, lines 12-16 * <br> * claims 1,4,6,8,9,12 * | 1-5,7-9, 11 | F16C39/06 <br> H02K7/09 <br> H02P6/10 |
| A | | 6,10 | |
| X | US 4 455 514 A (OHNO HIROTOSHI) 19 June 1984 (1984-06-19) <br> * abstract * <br> * column 1, line 57 - column 2, line 22 * <br> * column 2, line 51 - column 4, line 21 * | 1-5,7,9, 10 | |
| A | WO 02/067407 A (KIM DAE-GON) 29 August 2002 (2002-08-29) <br> * page 6, line 17 - page 11, line 12 * | 1-7,11 | |
| A | EP 1 189 335 A (SEIKO INSTR INC) 20 March 2002 (2002-03-20) <br> * page 32, line 57 - page 36, line 12 * | 8-11 | TECHNICAL FIELDS SEARCHED (Int.Cl.7) |
| A | EP 0 920 109 A (EBARA CORP) 2 June 1999 (1999-06-02) <br> * page 4, line 33 - page 5, line 41 * | 9-11 | F16C <br> H02K <br> H02P |
| A | WO 01/20751 A (DELPHI TECH INC) 22 March 2001 (2001-03-22) <br> * page 6, line 24 - page 8, line 19 * | 6,10 | |

The present search report has been drawn up for all claims

| Place of search | Date of completion of the search | Examiner |
|---|---|---|
| Munich | 11 October 2004 | Gols, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 04 25 1754

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2004

| Patent document cited in search report | | Publication date | Patent family member(s) | | Publication date |
|---|---|---|---|---|---|
| US 6236130 | B1 | 22-05-2001 | WO | 9940334 A1 | 12-08-1999 |
| | | | EP | 0972140 A1 | 19-01-2000 |
| | | | JP | 2001523439 T | 20-11-2001 |
| US 4455514 | A | 19-06-1984 | JP | 1504948 C | 13-07-1989 |
| | | | JP | 57177293 A | 30-10-1982 |
| | | | JP | 63050959 B | 12-10-1988 |
| | | | CH | 646285 A5 | 15-11-1984 |
| | | | DE | 3214569 A1 | 04-11-1982 |
| | | | KR | 8802580 B1 | 30-11-1988 |
| WO 02067407 | A | 29-08-2002 | KR | 2002067863 A | 24-08-2002 |
| | | | WO | 02067407 A1 | 29-08-2002 |
| | | | US | 2004066105 A1 | 08-04-2004 |
| EP 1189335 | A | 20-03-2002 | JP | 2002176793 A | 21-06-2002 |
| | | | EP | 1189335 A2 | 20-03-2002 |
| | | | US | 2002047683 A1 | 25-04-2002 |
| EP 0920109 | A | 02-06-1999 | JP | 11164600 A | 18-06-1999 |
| | | | JP | 11191988 A | 13-07-1999 |
| | | | JP | 11285289 A | 15-10-1999 |
| | | | JP | 11341881 A | 10-12-1999 |
| | | | CN | 1218150 A | 02-06-1999 |
| | | | EP | 0920109 A2 | 02-06-1999 |
| | | | US | 6078119 A | 20-06-2000 |
| | | | JP | 11341899 A | 10-12-1999 |
| WO 0120751 | A | 22-03-2001 | EP | 1219010 A1 | 03-07-2002 |
| | | | EP | 1400009 A2 | 24-03-2004 |
| | | | EP | 1219015 A1 | 03-07-2002 |
| | | | JP | 2003523703 T | 05-08-2003 |
| | | | JP | 2003510002 T | 11-03-2003 |
| | | | JP | 2003516703 T | 13-05-2003 |
| | | | WO | 0120751 A2 | 22-03-2001 |
| | | | WO | 0120761 A1 | 22-03-2001 |
| | | | WO | 0120767 A1 | 22-03-2001 |
| | | | US | 6465975 B1 | 15-10-2002 |
| | | | US | 6498449 B1 | 24-12-2002 |
| | | | US | 6373211 B1 | 16-04-2002 |

EPO FORM P0459

For more details about this annex : see Official Journal of the European Patent Office, No. 12/82